# EUROPÄISCHE PATENTSCHRIFT

(11) **EP 1 026 432 B1**
(45) Veröffentlichungstag und Bekanntmachung des Hinweises auf die Patenterteilung: **12.07.2006**
(21) Anmeldenummer: 99122379.3
(22) Anmeldetag: 10.11.1999
(51) Int. Cl.: F16L 19/02, F16L 23/22, F16L 37/252

(54) **Kupplungseinrichtung für Rohrleitungen**
Coupling device for pipelines
Dispositif de raccordement pour tuyaux

(30) Priorität: 03.02.1999 DE 19904164
(43) Veröffentlichungstag der Anmeldung: 09.08.2000
(73) Patentinhaber: ROBERT BOSCH GMBH, 70442 Stuttgart (DE)
(72) Erfinder: Rueeck, Gerhard, 74589 Satteldorf (DE); Krauss, Ulrich, 74532 Ilshofen (DE)

(56) Entgegenhaltungen:
- WO-A-96/21821
- WO-A-98/37352
- CH-A- 534 832
- DE-A- 3 143 369
- GB-A- 2 026 116
- US-A- 4 362 327

## Beschreibung

### Stand der Technik

Die Erfindung betrifft eine Kupplungseinrichtung für Rohrleitungen nach dem Oberbegriff des Anspruchs 1. Eine derartige, von der Firma Südmo Schleicher AG unter der Bezeichnung "Aseptikverschraubung mit O-Ring-Dichtung" bekannte Kupplungseinrichtung weist ein erstes Anschlußstück mit einer Aufnahme für eine Dichtung auf, gegen die ein zweites Anschlußstück mit seiner Stirnseite flächig anliegt. Infolge der ebenen Anlagefläche des zweiten Anschlußstücks gegen die Dichtung kommt es zu Hinterschneidungen zwischen der Dichtung und dem zweiten Anschlußstück, in denen sich Verunreinigungen ansammeln können. Insbesondere für den Fall, daß die Kupplungseinrichtung im eingebauten Zustand reinig- bzw. sterilisierbar sein soll (sog. CIP- bzw. SIP-Anwendungen), ist die bekannte Kupplungseinrichtung daher kritisch. Weiterhin weist die bekannte Kupplungseinrichtung an der Umfangsfläche des ersten Anschlußstücks ein Außengewinde auf, das mit einem Innengewinde am zweiten Anschlußstück zusammenwirkt. B+ei schwer zugänglichen Verbindungsorten innerhalb von Maschinen ist diese Art der Verbindung hinderlich, da zum Verschrauben der beiden Anschlußstücke mehrere Umdrehungen des zweiten Anschlußstücks mit einem entsprechenden manuellen Umgreifen erforderlich sind.

Aus der WO 96/21821 ist eine Rohrverbindung für den sterilen Einsatz gemäß dem Oberbegriff des Anspruchs 1 bekannt. Ein Dichtungsringsitz der Rohrverbindung weist annähernd kreisförmige Querschnittsfläche auf. Ein darin anzuordnender Dichtungsring besitzt einen Querschnitt in Form eines Ausschnitts einer Ellipse, welcher im montierten Zustand parallel zur Rohrinnenwandung ist. Zur Verbindung der beiden Rohre wird die Dichtung in den Dichtungsringsitz eingelegt und mittels einer Überwurfmutter verschraubt.

### Vorteile der Erfindung

Die erfindungsgemäße Kupplungseinrichtung für Rohrleitungen mit den kennzeichnenden Merkmalen des Anspruchs 1 hat demgegenüber den Vorteil, daß durch die Ausbildung eines Bajonettverschlusses an den beiden Anschlußstücken eine einfache Montierbarkeit erzielt wird, bei der kein Umgreifen mehr nötig ist, um die beiden Anschlußstücke vollständig miteinander zu verbinden, und Um zu verhindern, daß die Dichtung bei noch nicht montiertem zweiten Anschlußstück aus seiner Aufnahme im ersten Anschlußstück herausfällt, die Aufnahme im ersten Anschlußstück durch eine entsprechende Formgebung die Dichtung durch Klemmen hält. Um zu verhindern, daß es infolge eines aus der Verbindungsstelle der beiden Anschlußstücke herausragenden Dichtungsabschnitts zu einer Strömungsverengung kommt, ist es bevorzugt vorgesehen, die Innenwandungen der Anschlußstücke in Ihrem Verbindungsbereich aufzuweiten.

### Zeichnung

Ein Ausführungsbeispiel der Erfindung ist in der Zeichnung dargestellt und wird nachfolgend näher erläutert. Es zeigen:
Figur 1 eine Kupplungseinrichtung im Längsschnitt,
Figur 2 ein erstes Anschlußelement im Längsschnitt,
Figur 3 das erste Anschlußelement in einer Seitenansicht,
Figur 4 das erste Anschlußelement in einer Vorderansicht,
Figur 5 ein zweites Anschlußelement im Längsschnitt,
Figur 6 ein Kupplungsstück im Längsschnitt,
Figur 7 das Kupplungsstück nach Figur 6 in Vorderansicht und
Figur 8 ein Detail der Figur 1.

### Beschreibung des Ausführungsbeispiels

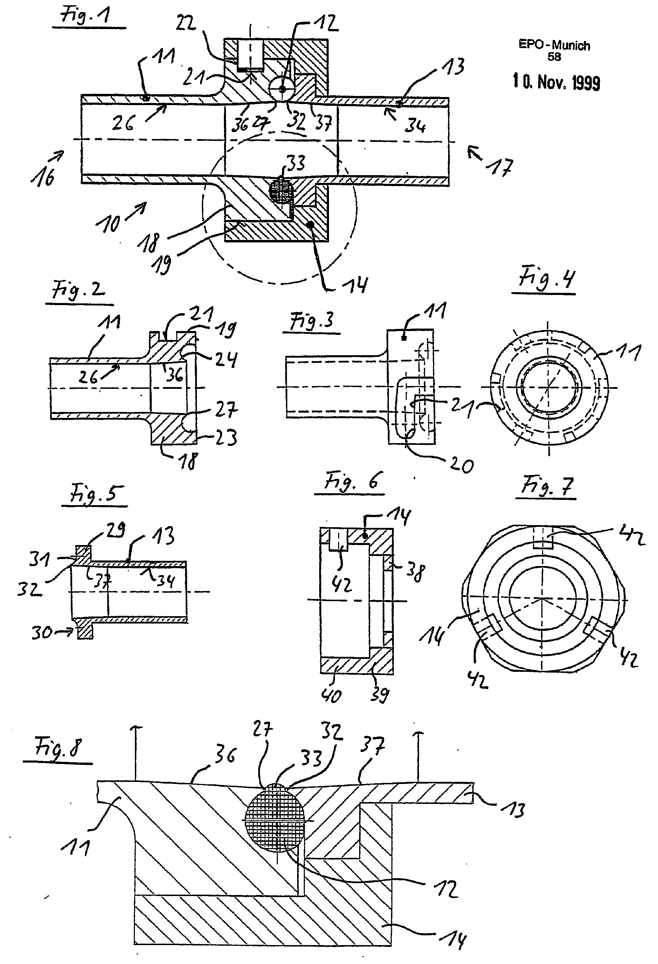

Die in der Figur 1 dargestellte Kupplungseinrichtung 10 ist Bestandteil einer Leitung für ein strömendes Medium in einer aseptisch arbeitenden Verpackungsmaschine. Die Kupplungseinrichtung 10 weist vier Bauteile auf, ein erstes Anschlußstück 11, eine O-Ring förmige Dichtung 12, ein zweites Anschlußstück 13 und ein Kupplungsstück 14. Über die freien Enden 16, 17 der beiden Anschlußstücke 11, 13 können nicht dargestellte Schläuche übergeschoben werden, die die unterschiedlichen Bereiche bzw. Einrichtungen der Verpackungsmaschine miteinander verbinden. Auch ist es möglich, die freien Enden 16, 17 mit starren Rohrstücken zu koppeln.

Das erste rohrförmige Anschlußstück 11 hat einen flanschförmig umlaufenden Kragen 18, an dessen äußerer Mantel- bzw. Umfangsfläche 19 wenigstens ein, im Ausführungsbeispiel jedoch über den Umfang gleichmäßig verteilt drei nutförmige Führungsbahnen 21 ausgebildet sind. Die Führungsbahnen 21 sind Bestandteil einer Bajonettverbindung 22. Besonders vorteilhaft ist es, die Steigung der Führungsbahnen 21 in ihren Endbereichen 20 wieder etwas, z.B. 0,1mm, in Gegenrichtung zu versehen. Im inneren Bereich der einen Stirnfläche 23 ist eine erste Aufnahme 24 für die kreisringförmige Dichtung 12 ausgebildet. Die erste Aufnahme 24 nimmt die Dichtung 12 in deren Bereich formschlüssig auf, wobei die erste Aufnahme 24 jedoch nur einen Teil der Dichtung 12 umgreift. Insbesondere ragt die in die erste Aufnahme 24 eingelegte Dichtung 12 über die Stirnfläche 23 hinaus, und die Innenwandung 26 des ersten Anschlußstücks 11 reicht mit ihrer umlaufenden Kante 27 nicht bis in Höhe der Stirnfläche 23. Um ein Verlieren der Dichtung 12 zu verhindern, weist die Aufnahme 24 bevorzugt einen etwas kleineren Außendurchmesser auf als die Dichtung 12, so daß die Dichtung 12 klemmend in der Aufnahme 24 gehalten ist.

Das zweite rohrförmige Anschlußstück 13 weist an seinem dem ersten Anschlußstück 11 zugewandten Ende einen flanschförmig umlaufenden Rand 29 auf. Die der Dichtung 12 zugewandte Stirnfläche 30 ist im Bereich der Dichtung 12 konkav ausgebildet, so daß sie eine zweite Aufnahme 31 zum formschlüssigen Umfassen der Dichtung 12 bildet. Dabei ragt die innere umlaufende Kante 32 der zweiten Aufnahme 31 bis nahe an die umlaufende Kante 27 der ersten Aufnahme 24 heran, wobei die im Verbindungsbereich der beiden Anschlußstücke 11, 13 zwischen den Kanten 27, 32 angeordnete Wulst 33 der Dichtung 12 infolge des Zusammendrückens der Dichtung 12 entsteht und in den Innenbereich der Kupplungseinrichtung 10 teilweise hineinragt, ohne daß zwischen der Wulst 33 und den beiden Anschlußstücken 11, 13 Hohlräume oder Hinterschneidungen ausgebildet werden. Um zu verhindern, daß die Wulst 33 der Dichtung 12 zu einer Strömungsverengung für das durch die Kupplungseinrichtung 10 strömende Medium führt, sind die Innenwandungen 26, 34 der beiden Anschlußstücke 11, 13 in deren Verbindungsbereich jeweils mit einer umlaufenden Schräge 36, 37 versehen, so daß der Strömungsquerschnitt im Bereich der Dichtung 12 durch die Wulst 33 der Dichtung 12 nicht über das in den Bereichen ohne Schrägen 36, 37 vorhandene Maß der Anschlußstücke 11, 13 reduziert ist.

Das ringförmige Kupplungsstück 14 weist drei Bereiche 38, 39, 40 mit unterschiedlichen Innendurchmessern auf, wovon der Bereich 38 den kleinsten Innendurchmesser und der Bereich 40 den größten Innendurchmesser aufweist.
In dem Bereich 40 sind in entsprechenden Ausnehmungen entsprechend der Führungsbahnen 21 drei Haltestifte 42 eingesetzt, die in das Innere des Kupplungsstücks 14 hineinragen, und die mit den Führungsbahnen 21 zusammenwirken und dabei die Bajonettverbindung 22 ausbilden. Der mittlere Bereich 39 hat einen Innendurchmesser, der minimal größer ist als der Außendurchmesser des Randes 29 des zweiten Anschlußstücks 13 sowie dessen Breite aufweist. Der Bereich 38 hat einen Innendurchmesser, der geringfügig größer ist als der Außendurchmesser des zweiten Anschlußstücks 13 in dessen randfreiem Bereich. Mit der beschriebenen Ausbildung des Kupplungsstücks 14 kann dieses auf das zweite Anschlußstück 13 in Art einer Überwurfmutter montiert werden (Figuren 1 und 8). Im Ausführungsbeispiel ist die Außenkontur des Kupplungsstücks 14 als Sechskant ausgebildet, um das Kupplungsstück 14 alternativ auch mit einem Schraubenschlüssel montieren zu können. Beim Zusammenfügen der beiden Anschlußstücke 11, 13 genügt es, das Kupplungsstück 14 um einen geringen Winkelbetrag zu drehen, um mittels der Bajonettverbindung 22 eine feste Verbindung herzustellen. Dabei wird durch die Ausbildung der Führungsbahnen 21 mit ihren Endbereichen 20, die in Gegenrichtung der ursprünglichen Steigung verläuft erreicht, daß sich die Bajonettverbindung 21 unabsichtlich öffnet. Außerdem ist so beim Montieren der Kupplungseinrichtung 10 das Einrasten der Haltestifte 42 in den Endbereichen 20 spür- und auch hörbar. Die durch das Zusammenfügen der beiden Anschlußstücke 11, 13 infolge der Pressung ausgebildete Wulst 33 der Dichtung 12 ist ein gewollter Effekt, damit die Lücken zwischen den beiden Kanten 27 und 32 an den Innenwandungen 26, 34 geschlossen werden. Dadurch, daß die ringförmige Dichtung 12 durch die beiden Aufnahmen 24, 31 nahezu vollständig umschlossen ist, kann die Dichtung 12 nur nach innen, unter Bildung der Wulst 33, ausweichen.

## Patentansprüche

1. Kupplungseinrichtung (10) für Rohrleitungen, insbesondere für aseptisch arbeitende Verpackungsmaschinen, mit einem ersten Anschlußelement (11), das an einer Stirnfläche (23) eine erste Ausnehmung (24) zur formschlüssigen Aufnahme einer Dichtung (12) aufweist, ein in Kontakt mit der Dichtung (12) anordenbares zweites Anschlußelement (13) und ein die beiden Anschlußelemente (11, 13) miteinander verbindendes Kupplungsstück (14), das das zweite Anschlußelement (13) in Art einer Überwurfmutter umschließt und in Formschluß mit wenigstens einer an der Umfangsfläche (19) des ersten Anschlußelements (11) ausgebildeten , Ausformung (21) bringbar ist, wobei das zweite Anschlußelement (13) auf der der Dichtung (12) zugewandten Stirnseite (30) eine der Form der Dichtung (12) angepaßte zweite Aufnahme (31) für die Dichtung (12) aufweist und daß die beiden Aufnahmen (24, 31) die Dichtung (12) bei montiertem Kupplungsstück (14) im Bereich der Innenwandung (26, 34) der Rohrleitung hohlraum- bzw. hinterschneidungsfrei aufnehmen, **dadurch gekennzeichnet, daß** die an der Umfangsfläche (19) des ersten Anschlußelements (11) ausgebildete Ausformung (21) Betandteil einer Bajonettverbindung (22) ist, die wenigstens einen an der Innenwandung des Kupplungsstücks (14) angeordneten Haltestift (42) umfaßt und daß die Dichtung (12) in der ersten Aufnahme (24) klemmend gehalten ist.

2. Kupplungseinrichtung nach Anspruch 1, **dadurch gekennzeichnet, daß** die Dichtung (12) unter Bildung einer Wulst (33) zwischen umlaufenden Kanten (27, 32) der Aufnahmen (24, 31) angeordnet ist.

3. Kupplungseinrichtung nach einem der Ansprüche 1 bis 2, **dadurch gekennzeichnet, daß** an den Innenwandungen (26, 34) der beiden Anschlußelemente (11, 13) im Bereich der Dichtung (12) Schrägen (36, 37) zur Vergrößerung des Strömungsquerschnitts ausgebildet sind.

## Claims

1. Coupling device (10) for pipelines, in particular for packaging machines working aseptically, comprising a first connection element (11) which has, at an end face (23), a first receptacle (24) for accommodating a seal (12) in a positive-locking manner, a second connection element (13) which can be arranged in contact with the seal (12), and a coupling piece (14) which connects the two connection elements (11, 13) to one another, encloses the second connection element (13) like a cap nut and can be brought into positive locking engagement with at least one shaped portion (21) formed on the circumferential surface (19) of the first connection element (11), the second connection element (13), on the end face (30) facing the seal (12), having a second receptacle (31) for the seal (12), which is adapted to the shape of the seal (12), and the two receptacles (24, 31) accommodating the seal (12) in a manner free of cavities or undercuts in the region of the inner wall (26, 34) of the pipeline when coupling piece (14) is fitted, **characterized in that** the shaped portion (21) formed on the circumferential surface (19) of the first connection element (11) is an integral part of a bayonet connection (22) which comprises at least one retaining pin (42) arranged on the inner wall of the coupling piece (14), and **in that** the seal (12) is held in a clamping manner in the first receptacle (24).

2. Coupling device according to Claim 1,
**characterized in that** the seal (12) is arranged with a bead (33) being formed between encircling edges (27, 32) of the receptacles (24, 31).

3. Coupling device according to either of Claims 1 and 2, **characterized in that** bevels (36, 37) for increasing the cross section of flow are formed on the inner walls (26, 34) of the two connection elements (11, 13) in the region of the seal (12).

## Revendications

1. Dispositif de raccord (10) pour tuyauteries, en particulier pour des machines de conditionnement fonctionnant de manière aseptique, comprenant un premier élément de raccord (11) qui, sur une face frontale (23), présente un premier logement (24) pour loger par complémentarité de formes une garniture d'étanchéité (12), un deuxième élément de raccord (13) pouvant être mis en contact avec la garniture d'étanchéité (12), et une pièce de couplage (14) reliant les deux éléments de raccord (11, 13) en entourant le deuxième élément de raccordement (13) à la manière d'un écrou d'accouplement, et qui peut être mise en contact par complémentarité de forme avec au moins une moulure (21) aménagée sur la périphérie (19) du premier élément de raccord (11), alors que le deuxième élément de raccord (13) présente sur la face frontale (30) tournée vers la garniture d'étanchéité (12) un deuxième logement (31) pour la garniture d'étanchéité (12) adapté à la forme de celle-ci, et que les deux logements (24, 31) logent la garniture d'étanchéité (12) dans la zone de la paroi intérieure (26, 34) de la tuyauterie sans espace creux ou contre-dépouille, lorsque la pièce de couplage (14) est montée,
**caractérisé en ce que**
la moulure (21) aménagée sur la surface enveloppe (19) du premier élément de raccord (11) fait partie d'une liaison à baïonnette (22) qui comprend au moins une tige de retenue (42) disposée sur la paroi intérieure de la pièce de couplage (14), et la garniture d'étanchéité (12) est maintenue enserrée dans le premier logement (24).

2. Dispositif de couplage selon la revendication 1,
**caractérisé en ce que**
la garniture d'étanchéité (12) forme un boudin (33) entre des arêtes périphériques (27, 32) des logements (24, 31).

3. Dispositif de couplage selon l'une quelconque des revendications 1 à 2,
**caractérisé en ce que**
des chanfreins (36, 37) sont formés sur les parois intérieures (26, 34) des deux éléments de raccord (11, 13) dans la zone de la garniture d'étanchéité (12) pour agrandir la section transversale d'écoulement.
